# EUROPEAN PATENT APPLICATION

(11) **EP 4 752 802 A1**
(43) Date of publication of application: **03.06.2026**
(21) Application number: 25219100.2
(22) Date of filing: 27.11.2025
(51) Int. Cl.: G06Q 10/0635, G06F 16/93, G06Q 10/10, G06Q 30/018, G06Q 50/18

(54) **MANAGING ENVIRONMENTAL, SOCIAL, AND GOVERNANCE (ESG) CLAUSES IN ELECTRONIC DOCUMENTS**

(30) Priority: 29.11.2024 US 202418964196
(71) Applicant: DocuSign, Inc., San Francisco, CA 94105 (US)
(72) Inventor: Molony, Brendan, Castle Rock, CO (US); Slimani, Hiba, Sceaux (FR); Shuman, Julie, San Marcos, CA (US); Waters, Michelle, Greystones (IE)
(74) Representative: Meissner Bolte Nürnberg

(57) **Abstract**

A system (102, 202) may determine (902) environmental, social, and govern-ance (ESG) goal data for an ESG clause type and determine (904) that a first clause of a first electronic document of a plurality of electronic documents and that a second clause of a second electronic document of the plurality of electronic documents correspond to the ESG clause type. The system may determine (906) first ESG commitment data based on content of the first clause of the first electronic document and determine (908) second ESG commitment data based on content of the second clause of the second electronic document. The system may generate (910) ESG metric data based on the first ESG commitment data and the second ESG commitment data and generate (912) dashboard data based on the ESG metric data. The system may output (914) the dashboard data.

## Description

This application claims priority to US Patent Application No. 18/964,196, filed 29 November 2024.

### TECHNICAL FIELD

This disclosure relates generally to electronic document management.

### BACKGROUND

Electronic document management allows for agreements to be electronically executed. For example, two parties may propose changes to an electronic document, and when the electronic document is acceptable, both parties may electronically sign the electronic document.

### SUMMARY

Environmental, social, and governance (ESG) goals, such as a 25% paper reduction goal, can be difficult to track. Individuals may manually review multiple electronic documents to track progress towards an ESG goal. Recent regulations may regulate both upstream and downstream impacts on ESG policies. To help comply with regulations and/or to limit potential risk, entities (e.g., companies) may benefit from closely tracking compliance with ESG goals.

A system, such as a document management system, may determine (e.g., with one or more machine learning models) ESG goal data (e.g., a goal to reduce CO₂ emissions) based on public information (e.g., the Internet). The system may determine, based on content of multiple electronic documents, ESG metric data (e.g., a total reduction in CO₂) for the ESG goal data and generate a dashboard (e.g., reports) to track compliance with the ESG goal data. In some examples, the system may identify an ESG clause to add to a working document (e.g., an electronic document being generated and/or negotiated) based on the ESG goal data and/or the ESG metric data.

In an example, a system for monitoring ESG clauses in electronic documents includes processing circuitry, a database configured to store a plurality of electronic documents, and computer readable media. The computer readable media comprises instructions that, when executed, cause the processing circuitry to determine ESG goal data for an ESG clause type and determine that a first clause of a first electronic document of the plurality of electronic documents and that a second clause of a second electronic document of the plurality of electronic documents correspond to the ESG clause type. The instructions further cause the processing circuitry to determine first ESG commitment data based on content of the first clause of the first electronic document and determine second ESG commitment data based on content of the second clause of the second electronic document. The instructions further cause the processing circuitry to generate ESG metric data based on the first ESG commitment data and the second ESG commitment data. The instructions further cause the processing circuitry to generate dashboard data based on the ESG metric data and output the dashboard data.

In some examples, a method for monitoring ESG clauses in electronic documents includes determining, by processing circuitry, ESG goal data for an ESG clause type and determining, by the processing circuitry, that a first clause of a first electronic document of a plurality of electronic documents and that a second clause of a second electronic document of the plurality of electronic documents correspond to the ESG clause type. The method further includes determining, by the processing circuitry, first ESG commitment data based on content of the first clause of the first electronic document and determining, by the processing circuitry, second ESG commitment data based on content of the second clause of the second electronic document. The method further includes generating, by the processing circuitry, ESG metric data based on the first ESG commitment data and the second ESG commitment data and generating, by the processing circuitry, dashboard data based on the ESG metric data. The method further includes outputting, by the processing circuitry, the dashboard data.

In some examples, computer-readable media is encoded with instructions that, when executed, cause processing circuitry to determine ESG goal data for an ESG clause type and determine that a first clause of a first electronic document of a plurality of electronic documents and that a second clause of a second electronic document of the plurality of electronic documents correspond to the ESG clause type. The instructions further cause the processing circuitry to determine first ESG commitment data based on content of the first clause of the first electronic document and determine second ESG commitment data based on content of the second clause of the second electronic document. The instructions further cause the processing circuitry to generate ESG metric data based on the first ESG commitment data and the second ESG commitment data and generate dashboard data based on the ESG metric data. The instructions further cause the processing circuitry to output the dashboard data.

The details of one or more examples of the techniques of this disclosure are set forth in the accompanying drawings and the description below. Other features, objects, and advantages of the techniques will be apparent from the description and drawings, and from the claims. Embodiments according to the invention are disclosed in particular in the appended claims.

### BRIEF DESCRIPTION OF THE DRAWINGS

FIG. 1 is a block diagram illustrating an example computing environment for monitoring compliance with Environmental, social, and governance (ESG), in accordance with the techniques of this disclosure.
FIG. 2 is a block diagram illustrating an example document management system, in accordance with techniques of this disclosure.
FIG. 3 is a conceptual diagram illustrating a first example process for monitoring compliance with ESG, in accordance with one or more techniques of this disclosure.
FIG. 4 is a conceptual diagram illustrating an example dashboard filtering for ESG, in accordance with one or more techniques of this disclosure.
FIG. 5A is a conceptual diagram illustrating an example dashboard identifying ESG clauses of electronic documents, in accordance with one or more techniques of this disclosure.
FIG. 5B is a conceptual diagram illustrating an example dashboard identifying contacts for ESG compliance, in accordance with one or more techniques of this disclosure.
FIG. 6 is a conceptual diagram illustrating an example dashboard illustrating a first set of reports for ESG compliance, in accordance with one or more techniques of this disclosure.
FIG. 7 is a conceptual diagram illustrating an example dashboard illustrating a second set of reports for ESG compliance, in accordance with one or more techniques of this disclosure.
FIG. 8 is a conceptual diagram illustrating an example dashboard illustrating a third set of reports for ESG compliance, in accordance with one or more techniques of this disclosure.
FIG. 9 is a flow chart illustrating an example of process for monitoring compliance with ESG, in accordance with techniques of this disclosure.

Like reference characters denote like elements throughout the text and figures.

### DETAILED DESCRIPTION

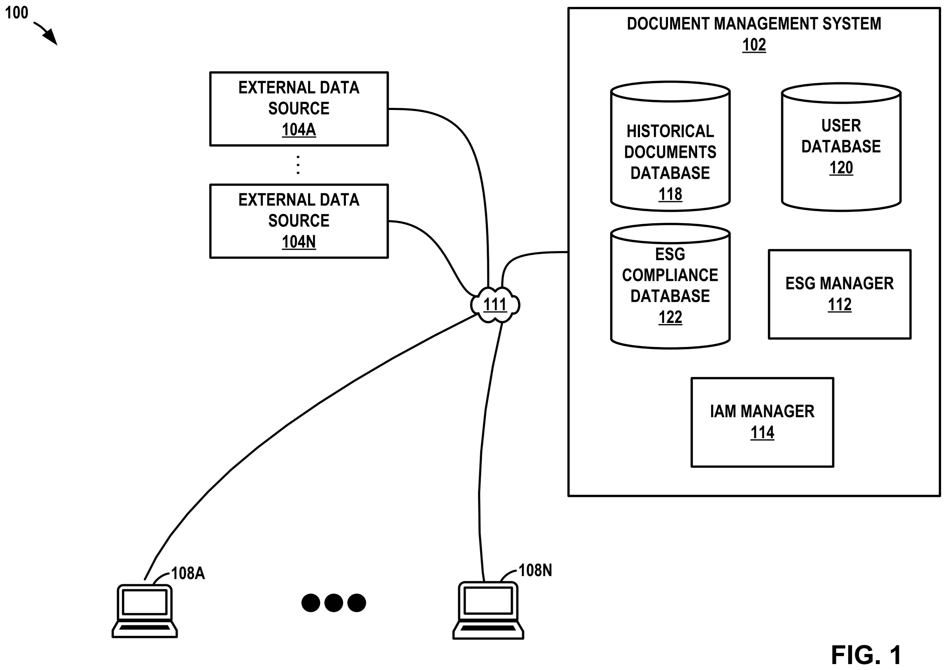

FIG. 1 is a block diagram illustrating an example computing environment 100 for monitoring environmental, social, and governance (ESG) clauses in electronic documents, in accordance with the techniques of this disclosure. In the example of FIG. 1, computing environment 100 includes document management system 102 (referred to herein as "system 102"), one or more external data sources 104 (referred to herein as simply, "externa data sources 104"), user devices 108A-108N (referred to herein as, "user devices 108"), and network 111.

System 102 may provide generation and management of electronic documents or document packages for users associated with user devices 108. In the example of FIG. 1, system 102 includes historical documents database 118, user database 120, ESG manager 112, and ESG compliance database 122. System 102 may include a collection of hardware devices, software components, and/or data stores that can be used to implement one or more applications or services provided to user devices 108 via network 111. In some examples, system 102 may represent a cloud computing system that provides one or more services via a network. That is, in some examples, system 102 may be a distributed computing system.

System 102 may allow user devices 108 to access documents, via network 111 using a communication protocol, as if such document was stored locally (e.g., to a hard disk of a corresponding user devices 108). Example communication protocols for accessing documents and objects may include, but are not limited to, Server Message Block (SMB), Network File System (NFS), or AMAZON Simple Storage Service (S3).

Intelligent agreement management (IAM) manager 114 may manage workflows for electronic documents. As used herein, IAM may include one or more of: helping to create agreements in a way that is collaborative, automated and integrated with all business processes and systems, helping to commit to agreements faster, more securely and with a better end-customer, partner and employee experience, or helping to manage agreements dynamically by, for example, breaking down the data hidden within, unlocking value, and eliminating or reducing unnecessary risk. For example, IAM manager 114 may provide tailored applications built for the needs of different individuals, teams, lines of business and/or industries. In some examples, IAM manager 114 may provide modular capabilities and/or workflow designer to build agreement process solutions to match business needs in an easy-to-use, no-code workflow tool. IAM manager 114 may provide enhanced integrations and interoperability to seamlessly connect agreement processes with critical business systems and enable the flow of agreement data across system 102 and partner solutions. In some examples, IAM manager 114 may provide a single, intelligent repository to centrally store, manage and analyze agreements across the organization, unlocking data trapped in agreements to drive efficiencies, uncover opportunities to lower costs and reduce risk.

For example, IAM manager 114 may access historical documents (e.g., stored in historical documents database 118) to provide informed, data-backed decisions to entity 110. For instance, IAM manager 114 may proactively suggest and/or simplify a generation of a workflow and/or workflow steps (e.g., Docusign Maestro^{™}). In some instances, IAM manager 114 may identify actionable insights, such as agreements with an upcoming renewal date (e.g., Docusign Navigator^{™}). IAM manager 114 may provide artificial intelligence (AI) capabilities in one or more steps of an agreement lifecycle. For example, IAM manager 114 may provide capabilities for identifying agreements, auto-tagging dynamic fields, generating summaries, and/or identifying risks of an agreement. IAM manager 114 may provide contract lifecycle management (CLM). For example, IAM manager 114 may automate tasks (e.g., auto-populate new agreements or automate agreement routing) and/or manage complex workflows, strengthen compliance (e.g., set conditional rules for review of non-standard terms or allow a legal department to define pre-approved clauses), and/or drive business intelligence.

Network 111 may include the Internet and/or may include or represent any public or private communications network or other network. For instance, network 111 may be a cellular network, Wi-Fi^{®}, ZigBee^{®}, Bluetooth^{®}, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 111 using any suitable communication techniques. Network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 111 using one or more network links. The links coupling such devices or systems to network 111 may be Ethernet, Asynchronous Transfer Mode (ATM) or other types of network connections, and such connections may be wireless and/or wired connections. One or more of the devices or systems illustrated in FIG. 1 or otherwise on network 111 may be in a remote location relative to one or more other illustrated devices or systems.

Data exchanged over network 111 may be represented using any suitable format, such as hypertext markup language (HTML), extensible markup language (XML), Portable Document Format (PDF), or JavaScript Object Notation (JSON). In some aspects, network 111 may include encryption capabilities to ensure the security of documents. For example, encryption technologies may include secure sockets layers (SSL), transport layer security (TLS), virtual private networks (VPNs), and Internet Protocol security (IPsec), among others.

User devices 108 may interact with system 102 through a user account with system 102 and optionally one or more user devices accessible to that user. Examples of user devices 108 may include, but are not limited to, portable, mobile, or other devices, such as mobile phones (e.g., smartphones), laptop computers, desktop computers, tablet computers, smart television systems. System 102 may stores account information and/or user information at user database 120. In situations in which system 102 stores and uses information of users operating user devices 108, system 102 may request explicit permission from the users prior to storing and using any personally identifiable information of the users.

Users of user devices 108 may represent an entity, such as an individual user, a group, an organization, a governmental entity, or a business entity (e.g., a corporation, limited liability company (LLC), or professional organization) that is able to interact with document packages (or other content) generated on or managed by system 102. Each user may be associated with a username, email address, full or partial legal name, or other identifier that may be used by system 102 to identify the user and to control the ability of the user to view, modify, execute, or otherwise interact with document packages managed by system 102.

IAM manager 114 may manage a workflow for an electronic document. As used herein a workflow may refer to a structured sequence of steps within system 102 designed to automate and/or streamline a process of preparing, sending, and managing electronic documents. Workflows may enhance efficiency by, for example, reducing manual tasks, ensuring compliance, and/or providing greater control over electronic document handling. A workflow may include one or more of templates, participants, steps, or conditional routing. A template may refer to one or more reusable documents with predefined fields and settings that standardize processes and/or reduce preparation time. Templates can include tags, field placements, and/or workflow routing information. Participants may include individuals and/or entities involved in the agreement process, such as signers, approvers, or recipients. Defining participant roles may help to ensure that each party receives and interacts with the electronic document appropriately. Steps may refer to one or more actions performed during the workflow, including, for example, sending electronic documents for signature, verifying identities, and/or archiving completed agreements. Each step can be configured to meet specific business requirements. Conditional routing may refer to automated decision-making within the workflow that directs electronic documents based on predefined conditions, such as the value of a field and/or the outcome of a previous workflow step, which may help to ensure that electronic documents follow a desired path without manual intervention.

IAM manager 114 may be configured to allow users of user devices 108 to create and send documents to one or more recipients for negotiation, collaborative editing, electronic execution (e.g., electronic signature), automation of contract fulfillment, archival, and analysis, among other tasks. IAM manager 114 may support negotiations between different entities. For example, user device 108A may be associated with a first entity (e.g., a business entity, a particular human being, or a governmental entity) and user device 108N may be associated with a second entity. In this example, user device 108A may send, during a negotiation, a first version of an electronic document (e.g., an electronic contract) to system 102. IAM manager 114 may store the first version of the electronic document in historical documents database 118 and output the first version of the electronic document to user device 108N. In this example, user device 108N may generate a second version of the electronic document that includes one or more changes from the first version of the electronic document and may send the second version of the electronic document to system 102. IAM manager 114 may store the second version of the electronic document in historical documents database 118 and output the second version of the electronic document to user device 108A. The process may continue until both parties agree (e.g., electronically sign) to the final version of the electronic document. In this example, IAM manager 114 may store the final version of the electronic document in historical documents database 118. Throughout negotiations, IAM manager 114 may monitor and/or track the state of the negotiation (e.g., a status of the workflow) as well as proactively facilitate negotiations. For example, IAM manager 114 may automatically provide reminders to user devices 108.

System 102 may be located on premises and/or in one or more data centers, with each data center a part of a public, private, or hybrid cloud. ESG manager 112 and/or IAM manager 114 may represent distributed applications. ESG manager 112 and/or IAM manager 114 may support, for example, enterprise software, financial software, office or other productivity software, data analysis software, customer relationship management, web services, educational software, database software, multimedia software, information technology, healthcare software, or other types of applications or services. ESG manager 112 and/or IAM manager 114 may be provided as a service (-aaS) for Software-aaS, System-aaS, Infrastructure-aaS, Data Storage-aas (dSaaS), or other type of service.

External data sources 104 may provide access to information (e.g., third party information) stored outside of system 102. One or more of external data sources 104 may represent data sources available via the Internet. For example, external data sources 104 may include publicly available information, with or without registration or subscription fees, from the Internet, such as news releases, blog reports, company profiles, financial reports, or social media. For example, external data sources 104 may include represent enterprise resource planning (ERP) sources. As used herein, an ERP may refer to software system that helps businesses manage and streamline core processes in real time. External data source 104 may be implemented using one or more storage systems, such as web servers and cloud computing systems.

ESG manager 112 may integrate with an agreement ecosystem provide IAM manager 114, for example, by integrating atop of IAM core capabilities and platform services to address error-prone, time-consuming, manual, trapped data, and/or disconnected agreement process problems, which may help users of system 102 integrate across offerings IAM manager 114 and/or with processes used to generate an electronic document. For example, there may be a growing desire for entities (e.g., enterprises) to include ESG clauses in tenders and/or contracts, which may be driven by, for example, one or more of increasing awareness of environmental and social issues, regulatory pressure, investor demand, or consumer expectations. Accordingly, ESG manager 112 may help entities manage sustainability and ESG across all verticals (e.g., ESG commitment data from suppliers and/or distributors).

For example, IAM manager 114 may integrate various user personas within a single entity, such as legal professionals, corporate social responsibility (CSR) managers, procurement officers and supply chain managers, and IT teams. Legal professionals may represent people or personas (e.g., using AI) responsible for drafting, reviewing, and managing contracts. For example, a legal professional may embed an ESG clause into an electronic document, ensure compliance with regulations, and/or analyze existing agreement for ESG related terms. CSR managers may represent people or personas responsible for developing and implementing sustainability strategies for CSR initiatives. For example, a CSR manager may track ESG commitments, report on sustainability metrics, and/or ensure that the entity's practices align with environment and social goals of the entity. Procurement officers may represent people or personas overseeing a sourcing of goods and services and managing supplier relationships. For example, a procurement officer may ensure that suppliers adhere to ESG standards, incorporate sustainability criteria into procurement contracts, and/or monitor compliance across the supply chain. IT teams may be involved in deploying tools across the entity, ensure ESG integration with existing systems, and/or support digitization efforts that contribute to sustainability.

In accordance with the techniques of the disclosure, ESG manager 112 may determine ESG goal data for an ESG clause type. For example, ESG manager 112 may determine public ESG data from one or more external data sources 104 based on a particular entity. For instance, the particular entity may represent the company reviewing their ESG goals. ESG compliance database 122 may be configured to store private ESG data associated with the particular entity. For example, ESG manager 112 may receive the private ESG data from a user device associated with the particular entity and limit access to the private ESG data to user devices associated with the particular entity. In this example, ESG manager 112 may generate entity-specific ESG data based on the private ESG data and the public ESG data. ESG manager 112 may select ESG goal data from the entity-specific ESG data based on the ESG clause type. For instance, ESG manager 112 may select ESG goal data from the entity-specific ESG data that is associated with a carbon dioxide (CO₂) emissions ESG goal based on the ESG clause type being associated with the CO₂ emissions ESG goal.

ESG manager 112 may determine that a first clause of a first electronic document of the plurality of electronic documents and that a second clause of a second electronic document of the plurality of electronic documents correspond to the ESG clause type. For example, ESG manager 112 may determine that the first clause corresponds to the ESG clause type based on a determination that metadata maps the first clause to the ESG clause type. In some examples, ESG manager 121 may determine, with one or more machine learning models, that the first clause corresponds to the ESG clause type. Similarly, ESG manager 112 may determine that the second clause corresponds to the ESG clause type based on a determination that metadata maps the second clause to the ESG clause type. In some examples, ESG manager 121 may determine, with one or more machine learning models, that the second clause corresponds to the ESG clause type.

ESG manager 121 may determine first ESG commitment data based on content of the first clause of the first electronic document. For example, ESG manager 121 may determine a monetary value and/or quantity of waste reduced (e.g., paper, electronics, or food) based on the content of the first clause. Similarly, ESG manager 121 may determine second ESG commitment data based on content of the second clause of the second electronic document. In this example, ESG manager 121 may generate ESG metric data based on the first ESG commitment data and the second ESG commitment data. For example, ESG manager 121 may determine a total monetary value for electronic documents that include at least one clause that corresponds to the clause type, a number of electronic documents executed per month that include at least one clause that corresponds to the clause type, and/or a total quantity for each respective type of waste reduced (e.g., paper, electronics, and/or food).

ESG manager 121 may generate dashboard data based on the ESG metric data and output the dashboard data. For example, ESG manager 121 may generate report data illustrating a comparison of ESG goal data for an entity (e.g., a goal to reduce paper waste by 25 % by 2030) and ESG metric data (e.g., commitments to reduce paper waste in existing agreements that indicate a 30 % reduction in paper waste by 2030). In this example, ESG manager 121 may create dashboard data to visualize these commitments. For instance, ESG manager 121 may generate a chart showing the ESG metric data for the ESG clause and/or the ESG goal data for the ESG clauses. In some instances, ESG manager 121 may generate a chart showing an all time savings of one or more of a carbon emissions reduced, a number of gallons of water conserved, a number of pounds of wood saved, or a number of pounds of waste eliminated.

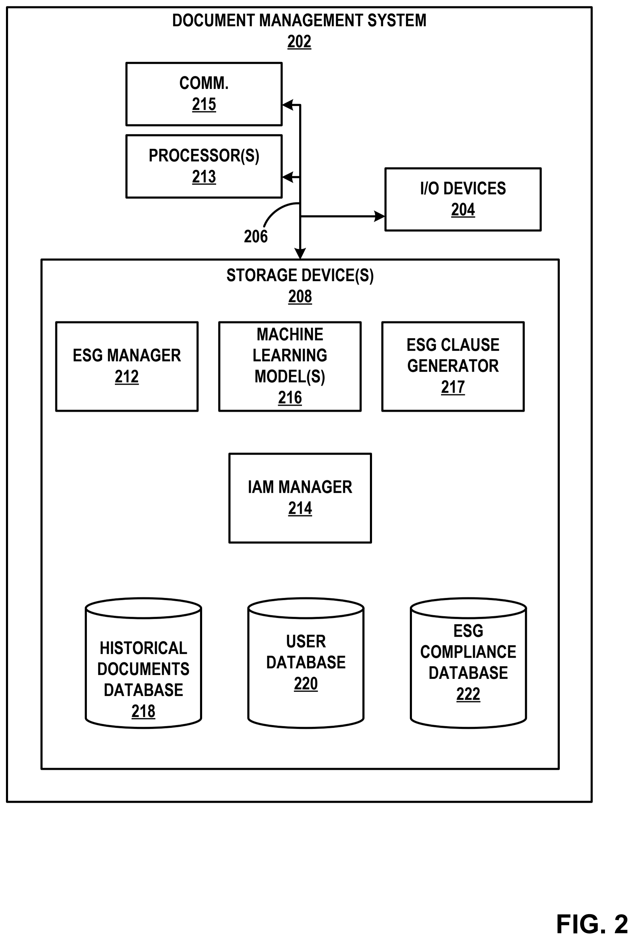

FIG. 2 is a block diagram illustrating an example document management system 202, in accordance with techniques of this disclosure. FIG. 2 is discussed with reference to FIG. 1 for example purposes only. Document management system 202 (referred to herein as "system 202") may include communication units 215, one or more processors 213, input/output (I/O) devices 204, one or more storage devices 208, and communication channels 206. FIG. 2 illustrates only one particular example of document management system 202, and many other examples of document management systems may be used in other instances and may include a subset of components included in example document management system 202 or may include additional components not shown in FIG. 2. For example, functionality of processors 213, communication units 215, I/O devices 204, and/or storage devices 208 may be distributed across multiple computing devices within a cloud-based environment provided by document management system 202.

Communication channels 206 may interconnect each of the components 215, 213, 204, and 208 for inter-component communications (e.g., physically, communicatively, and/or operatively). In some examples, communication channel 206 may include a system bus, a network connection, an inter-process communication data structure, or any other method for communicating data. Communication units 215 of document management system 202 may communicate with one or more external devices via one or more wired and/or wireless networks by transmitting and/or receiving network signals on the one or more networks.

One or more input devices of I/O devices 204 may represent any input devices of document management system 202 not otherwise separately described herein. Input devices of I/O devices 204 may generate, receive, and/or process input. For example, one or more input devices of I/O devices 204 may generate or receive input from a network, a user input device, or any other type of device for detecting input from a human or machine.

One or more output devices of I/O devices 204 may represent any output devices of document management system 202 not otherwise separately described herein. Output devices of I/O devices 204 may generate, present, and/or process output. For example, one or more output devices of I/O devices 204 may generate, present, and/or process output in any form. Output devices of I/O devices 204 may include one or more universal serial bus (USB) interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

Processors 213 may include processing circuitry for implementing functionality and/or execute instructions within document management system 202. For example, processors 213 may receive and execute instructions to determine ESG goal data and/or ESG compliance data. These instructions executed by processors 213 may cause document management system 202 to store and/or modify information within storage devices 208 or processors 213 during program execution. Processors 213 may execute instructions of ESG manager 212, IAM manager 214, one or more machine learning models 216, and/or ESG clause generator 217. In some instances, processors 213 may include processing circuitry associated with cloud computing processing components (e.g., distributed processors across a cloud computing system).

Storage devices 208 may include historical documents database 218, user database 220, and ESG compliance database 222. Historical documents database 218 may store historical electronic documents, such as executed agreements (e.g., electronic contracts) and/or unexecuted documents (e.g., rejected agreement documents). User database 220 may include a role (e.g., legal, technical, or finance) for each user. In some examples, user database 220 may include personal preferences for each user and/or an aggregated personal profile for each user. Personal preferences may include user-defined preferences. ESG compliance database 222 may store private ESG data associated with a particular entity. For instance, ESG compliance database 222 may store an ESG goal (e.g., a CO₂ emission reduction value by 2030 or a zero-carbon goal by 2040) for a particular entity mapped to an ESG clause type.

One or more machine learning models 216 (also referred to herein as simply "machine learning model 216") may represent one or more machine learning models that, for example, integrate with IAM, including AI-Powered CLM Tools, such as DOCUSIGN CLM, to provide AI-powered contract management solutions. ESG manager 212 may use machine learning model 216 and/or IAM data to search for all publicly available entity-specific sustainability information for an entity. For example, machine learning model 216 may help entities, for example, search the Internet (e.g., search one or more external data sources 104) for entity specific sustainability terminology for an entity. For instance, ESG manager 212, with machine learning model 216, may determine public ESG data from one or more external data sources 104.

Machine learning model 216 may include one or more generative machine learning models and/or one or more traditional machine learning models. Examples of generative machine learning models may include, for example, transformer-based deep neural networks or large language models (LLMs). Generative machine learning models may be associated with natural language prompts, or simply "prompts." Examples of traditional machine learning models may include, for example, a rule-based machine learning model or a deterministic machine learning model. Traditional machine learning models may be associated with training data.

Machine learning model 216 may include a generative machine learning model configured to summarize information. Examples of a generative machine learning model may include encoder based models, decoder based models, or encoder/decoder based models. Examples of encoder based models may include, for example, a bidirectional encoder representations from transformers or "BERT" machine learning model, convolutional neural networks (CNNs), and/or recurrent neural networks (RNNs). Examples of decoder based models may include, for example, generative pre-trained transformers (GPT) models, variational autoencoders (VAEs), and/or generative adversarial networks (GANs). Examples of encoder/decoder based models may include, for example, a transformer encoder-decoder, such as a bidirectional (BERT-like) encoder and an autoregressive (GPT-like) decoder (e.g., BART), a Text-To-Text Transfer Transformer (T5) model, and/or large language models (LLMs). Machine learning model 216may include a visualization tool model, such as Tensorboard^{™} or matplotlib^{™}).

ESG manager 212 may represent a set of tools that build on IAM technology solutions, for example, provided by IAM manager 214. ESG manager 212 may represent a separate component (e.g., product) from IAM manager 214, however, in some examples, ESG manager 212 may be part of IAM manager 214. For example, ESG manager 212 may track compliance with ESG commitments across multiple agreements/workflows. In some examples, ESG manager 212 may provide specialized features for ESG agreements (e.g., green agreements), which may proactively identify ESG clauses (e.g., green clauses) and/or quantify sustainability goals and commitments. ESG manager 212 may gather information about an entity's ESG regulations from electronic documents (e.g., former contracts) and/or through additional information obtained using machine learning model 216. For example, ESG manager 212 may provide one or more of: ESG goal tracking (e.g., green goal tracking), ESG contract visibility (e.g., green contract visibility), supplier monitoring, live regulatory visibility, seamless integration of sustainability language, shortened review process, negotiation leverage, risk mitigation, contact transparency, or data for corrective action. In this way, ESG manager 212 may create, commit, manage, identify (e.g., identifying opportunities and/or common threads for each ESG goal), and quantify progress towards an ESG goal (e.g., assessing and/or measuring progress throughout the course of each electronic document). In some examples, ESG manager 212 may build on an IAM manager 214 to form one connected platform to create, commit to, and/or manage electronic documents.

In accordance with the techniques of the disclosure, ESG manager 212 may determine ESG goal data for an ESG clause type. Examples of ESG clause types may include, for example, human rights, anti-bribery and anti-money laundering, greenhouse gas emissions, net zero targets, and/or waste disposal practices. For example, ESG manager 212 may determine (e.g., with machine learning model 216) public ESG data from one or more external data sources 104 based on a particular entity. For instance, the particular entity may represent the company reviewing their ESG goals. ESG compliance database 222 may be configured to store private ESG data associated with the particular entity. For example, ESG manager 212 may receive the private ESG data from a user device associated with the particular entity and limit access to the private ESG data to user devices associated with the particular entity. In this example, ESG manager 212 may generate entity-specific ESG data based on the private ESG data and the public ESG data. ESG manager 212 may select ESG goal data from the entity-specific ESG data based on the ESG clause type. For instance, ESG manager 212 may select ESG goal data from the entity-specific ESG data that is associated with a CO₂ emissions ESG goal based on the ESG clause type being associated with the CO₂ emissions ESG goal.

ESG manager 212 may determine electronic documents that include ESG clauses (e.g., green clauses). For example, ESG manager 212 may detect all ESG clauses within a specific electronic document. In some examples, ESG manager 212 may determine an ESG clause type for an ESG clause. For example, ESG manager 212 may identify and/or tag ESG clauses in electronic documents and group the ESG clauses for reporting. For example, ESG manager 212 may review, with machine learning model 216, electronic documents for commitments made by an entity. For instance, ESG manager 212 may identify, with machine learning model 216, ESG clauses in electronic documents. For example, machine learning model 216 may scan (e.g., with machine learning model 216) electronic documents stored in historical documents database 218 for specific sustainability-related keywords, clauses, and commitments, allowing entities to quantify and report on "green" agreements. For example, ESG manager 212, with machine learning model 216, may scan electronic documents stored in historical documents database 218 for one or more of regulatory requirements, sustainability clauses in supply chains, green procurement policies, sustainable financing clauses, ESG clauses in mergers and acquisitions, corporate governance, investor pressure, or human rights and ethical sourcing.

ESG manager 212 may track ESG obligations and/or ESG tasks. For example, ESG manager 212 may identify an owner and/or due date (active vs scheduled) for an ESG clause type. In this way, ESG manager 212 may provide a framework that maps ESG clauses (e.g., grouped from multiple electronic documents to an ESG clause type. Using the mapping of ESG clauses to an ESG clause type, ESG manager 212 may identify goal progress and/or map each ESG clause to obligation/tasks. For example, ESG manager 212 may identify all electronic documents that include an ESG clause mapped to a particular clause type. In this example, ESG manager 212 may further identify a subset of the electronic documents that include an ESG clause mapped to a particular clause type and that satisfy filter criteria (e.g., a particular counterparty name or expiration withing a time range).

In accordance with the techniques of the disclosure, ESG manager 212 may determine that a first clause of a first electronic document of the plurality of electronic documents and that a second clause of a second electronic document of the plurality of electronic documents correspond to the ESG clause type. For example, ESG manager 212 may determine that the first clause corresponds to the ESG clause type based on a determination that metadata maps the first clause to the ESG clause type. In some examples, ESG manager 212 may determine, with machine learning model 216, that the first clause corresponds to the ESG clause type. Similarly, ESG manager 212 may determine that the second clause corresponds to the ESG clause type based on a determination that metadata maps the second clause to the ESG clause type. In some examples, ESG manager 212 may determine, with machine learning model 216, that the second clause corresponds to the ESG clause type.

ESG manager 212 may determine first ESG commitment data based on content of the first clause of the first electronic document. For example, ESG manager 212 may determine a monetary value, or a type and/or quantity of waste reduced (e.g., paper, electronics, or food) based on the content of the first clause. Similarly, ESG manager 212 may determine second ESG commitment data based on content of the second clause of the second electronic document.

In this example, ESG manager 212 may generate ESG metric data based on the first ESG commitment data and the second ESG commitment data. For example, ESG manager 212 determine a total monetary value for electronic documents that include at least one clause that corresponds to the clause type, a number of electronic documents executed per month that include at least one clause that corresponds to the clause type, a total quantity for each respective type of waste reduced (e.g., paper, electronics, and/or food), or a number of agreements in effect that include at least one clause that corresponds to the clause type.

ESG manager 212 may determine a risk value for compliance with the ESG goal data based on the ESG goal data and the ESG metric data. For example, ESG manager 212 may determine, with machine learning model 216, the risk value for compliance with the ESG goal data based on a comparison of the ESG goal data and the ESG metric data. In some examples, ESG manager 212 may determine, with machine learning model 216, the risk value for compliance with the ESG goal data based on the ESG goal data and the ESG metric data.

ESG manager 212 may sort (e.g., with machine learning model 216) each ESG clause within a specific electronic document into a risk category of a set of risk categories (e.g., three categories) based on the risk value for compliance with the ESG goal data. For example, ESG manager 212 may select, from a plurality of risk categories, a risk category for the ESG clause type based on the risk value for compliance with the ESG goal data. For instance, ESG manager 212 may sort one or more clauses into a first risk category (e.g., Green Clause Detected), which may represent clauses that align with the entity's environmental and/ or ESG goals. Clauses in the first risk category may represent clauses in compliance with entity guidelines. ESG manager 212 may select the first risk category for ESG clause types assigned a first set of risk values (e.g., a low risk band of risk values). ESG manager 212 may sort one or more clauses into a second risk category (e.g., Modifications Recommended), which may represent clauses that may need negotiations and/or recommendations added in order to be accepted. ESG manager 212 may select the second risk category for ESG clause types assigned a second set of risk values (e.g., a middle risk band of risk values). ESG manager 212 may sort one or more clauses into a third risk category (e.g., "Risky Clauses", which may represent clauses that may specify at-risk compliance flags. ESG manager 212 may select the third risk category for ESG clause types assigned a third set of risk values (e.g., a high risk band of risk values). In some examples, ESG manager 212 may generate the dashboard data to display an indication of one or more of the first ESG clause or the second ESG clause for inclusion in a working document.

ESG manager 212 may generate dashboard data based on the ESG metric data. In this example, ESG manager 212 may output the dashboard data, for example, to user device 108A. For example, ESG manager 212 may generate report data illustrating a comparison of ESG goal data for an entity (e.g., a goal to reduce paper waste by 25 % by 2030) and ESG metric data (e.g., commitments to reduce paper waste in existing agreements that indicate a 30 % reduction in paper waste by 2030). In this example, ESG manager 212 may create dashboard data to visualize these commitments. For instance, ESG manager 212 may generate the dashboard data to display both an indication of the ESG clause type and an indication of the risk value for compliance with the ESG goal data. In some examples, ESG manager 212 may generate the dashboard data to display at least a portion of the content of the first clause of the first electronic document. ESG manager 212 may generate the dashboard data to display an indication of contact data assigned to the ESG clause type.

ESG manager 212 may, based on a determination that the risk value for compliance with the ESG goal data does not satisfy a risk threshold, determine count data indication a number of electronic documents of the plurality of electronic documents that comprise at least one clause corresponding to the ESG clause type and generate the dashboard data based on the count data. For example, ESG manager 212 may generate the dashboard data to show a chart (e.g., bar chart) showing the count data for each ESG clause type.

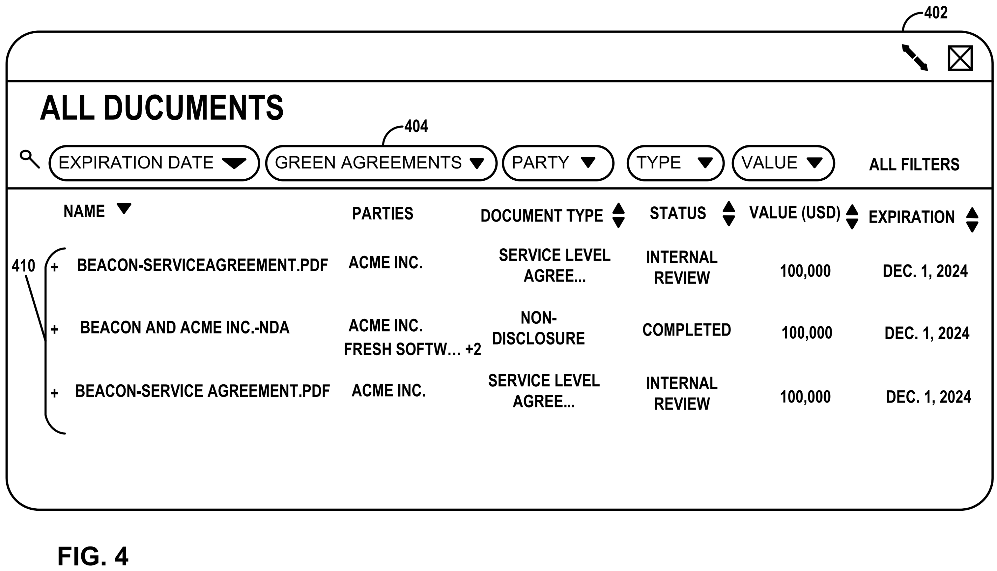

ESG clause generator 217 may assist with ESG clause generation and/or integrate with future workflows. For example, ESG clause generator 217 may provide an ESG clause recommendation. For instance, ESG clause generator 217 may identify a potential ESG clause for inclusion in a working document. In some examples, ESG clause generator 217, with IAM manager 214, may add one or more workflow steps to a workflow for the working document in response to ESG clause generator 217 providing an ESG clause recommendation. For instance, IAM manager 214 may add an approval workflow step to review/approve adding the ESG clause to a workflow for the working document. In some examples, IAM manager 214 may generate a user interface (e.g., illustrating one or more components of the dashboards illustrated in FIGS. 4-8) based on the dashboard data generated by ESG manager 212. For instance, IAM manager 214 may generate a user interface for a workflow step (e.g., a negotiation workflow step) that indicates a risk value for an ESG clause and/or contact data associated with the ESG clause.

ESG clause generator 217 may determine an ESG clause to add to a working document based on ESG commitment data (e.g., the first ESG commitment data and/or the second ESG commitment data). For example, ESG clause generator 217 may determine that one or more of first ESG commitment data determined from a first clause of a first electronic document and second ESG commitment data determined from a second clause of a second electronic document include an ESG clause for a particular ESG clause type. In this example, ESG clause generator 217 may determine that the working document does not include an ESG clause for the particular ESG clause type. Based on the determination that the first ESG commitment data and/or the second ESG commitment data includes an ESG clause for the particular ESG clause type and that the working document does not include an ESG clause for the particular ESG clause type, ESG clause generator 2040 may identify an ESG clause for the particular ESG clause type. For instance, ESG clause generator 217 may identify an ESG clause for a zero-carbon goal by 2040 based on a determination that that the first commitment data and/or the second commitment data includes an ESG clause for the zero-carbon goal by 2040 and that the working document does not include an ESG clause for the zero-carbon goal by 2040.

ESG clause generator 217 may identify an ESG clause to add to a working document based on ESG goal data (e.g., public ESG data and/or entity-specific ESG data in electronic documents with the entity). For example, ESG clause generator 217 may determine that ESG goal data indicates an ESG goal associated (e.g., assigned) to a particular ESG clause type. For instance, ESG clause generator 2040 may determine that ESG goal data indicates an ESG goal for an entity is to reduce paper waste by 25 % by 2030. In this example, ESG clause generator 217 may determine that the working document does not include an ESG clause for the particular ESG clause type. Based on the determination that the ESG goal data indicates an ESG goal associated to a particular ESG clause type and that the working document does not include an ESG clause for the particular ESG clause type, ESG clause generator 2040 may identify an ESG clause for the particular ESG clause type. For instance, ESG clause generator 217 may identify an ESG clause for reducing paper waste by 25 % by 2030 based on a determination that that the ESG goal data indicates an ESG goal for an entity is to reduce paper waste by 25 % by 2030 and that the working document does not include an ESG clause for reducing paper waste.

ESG clause generator 217 may identify an ESG clause to add to a working document based on ESG metric data. For example, ESG clause generator 217 may identify an ESG clause to add to a working document based on a risk value of an ESG clause for compliance with the ESG goal data. For instance, ESG clause generator 217 may identify an ESG clause indicating a commitment to reduce CO₂ emissions to add to the working data based on a determination that ESG metric data indicates a high risk value for compliance with an ESG goal of reducing CO₂ emissions by a certain percentage by a certain date.

In the above examples, ESG clause generator 217 identified an ESG clause to add to a working document based on one of the ESG commitment data, ESG goal data, or the ESG metric data. However, in some examples, ESG clause generator 217 may determine the ESG clause to add based on one or more of ESG commitment data (e.g., the first ESG commitment data and/or the second ESG commitment data), the ESG goal data, or the ESG metric data. For instance, ESG clause generator 217 may determine an ESG clause to add to the working document based on the first ESG commitment data, the second ESG commitment data, and the ESG goal data.

IAM manager 214 may determine whether approval criteria for adding the ESG clause to the working document has been satisfied. For example, IAM manager 214 may output a prompt to user device 108A to provide an indication of approval of the ESG clause. For instance, IAM manager 214 may cause, during a workflow step, user device 108A to provide a prompt configured to receive user input data (e.g., from user device associated with a CSR manager) indicating approval or disapproval of addition of the ESG clause. IAM manager 214 may determine the CSR manager based on user data stored at user database 220. For instance, IAM manager 214 may determine that a particular user is assigned by the user data as a CSR manager (e.g., assigned a CSR review role). In this example, IAM manager 214 may provide the prompt to user device 108A based on a determination that user device 108A is associated with the particular user is assigned to the CSR manager role (e.g., the particular user has logged into user device 108A). IAM manager 214 may receive user input data via the user interface to satisfy the approval criteria. In this example, IAM manager 214 may determine that the approval criteria for adding the ESG clause to the working document has been satisfied in response to determining that user input data (e.g., received from user device 108A) indicates approval to add the ESG clause to the working document.

Based on a determination that the approval criteria for adding the ESG clause to the working document has been satisfied, IAM manager 214 may generate an electronic document based on the identified ESG clause and the working document. For example, IAM manager 214 may generate a finalized version the electronic document that includes the ESG clause and a respective signing block assigned to each signer. In this example, IAM manager 214 may output the finalized version of the electronic document with the ESG clause (e.g., to one or more users devices associated with the signers). IAM manager 214 may receive the electronic document with the ESG clause and with the executed signatures and store the electronic document at historical documents database 218. In this way, IAM manager 214, with ESG clause generator 217, may proactively identify ESG clauses to add to working documents based on one or more of ESG commitment data, ESG goal data, or ESG metric data, which may help to reduce a processing burden, storage burden, and/or bandwidth usage of system 202 compared to systems that identify ESG clauses without determining ESG commitment data, ESG goal data, or ESG metric data.

The techniques described herein may provide one or more technical advantages that realize one or more practical applications. For example, system 202 may improve an efficiency of a system managing electronic documents by, e.g., proactively determining ESG commitment data directly from electronic documents, which may potentially reduce an amount of computational burden on the system, reduce an amount of power consumed by system 202, reduce an amount of data transmitted and/or received by system 202, and/or reduce a memory usage of system 202 compared to systems that rely solely on a storage of ESG commitment data separate from electronic documents. In some examples, system 202 may improve an efficiency of a system managing electronic documents by, e.g., proactively generating ESG metric data for generating dashboard data. Proactively generating ESG metric data may allow for ESG commitment data to be omitted from dashboard data, which may potentially reduce an amount of computational burden on the system, reduce an amount of power consumed by system 202, reduce an amount of data transmitted and/or received by system 202, and/or reduce a memory usage of system 202 compared to systems that rely on ESG commitment data for inclusion in dashboard data.

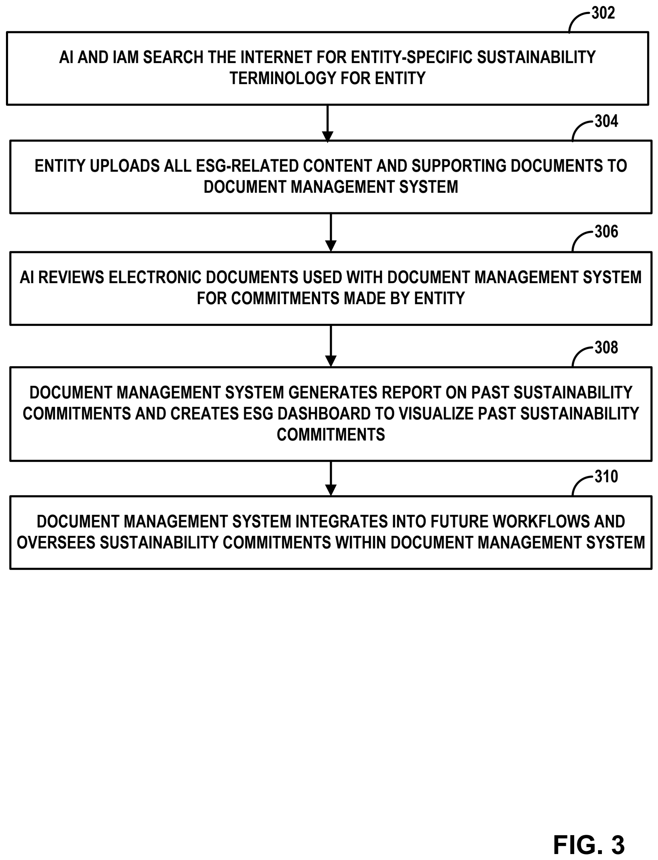

FIG. 3 is a conceptual diagram illustrating a first example process for monitoring compliance with ESG, in accordance with one or more techniques of this disclosure. FIG. 3 is discussed with reference to FIGS. 1-2 for example purposes only.

ESG manager 212 may search, with machine learning model 216, the Internet (e.g., search one or more external data sources 104) for entity specific sustainability terminology for an entity (302). In this example, an entity may upload all ESG-related content and supporting documents to system 102 (304). For instance, user device 108A may upload all ESG-related content and supporting documents to system 202, which may store the ESG-related content and supporting documents as entity-specific ESG data at ESG compliance database 222.

ESG manager 212 may review, with machine learning model 216, electronic documents used with system 202 for commitments made by the entity (306). For example, ESG manager 212 may determine first ESG commitment data (e.g., a zero-carbon goal by 2030 across all suppliers for an electronic document) based on content of a first clause of a first electronic document and determine second ESG commitment data (e.g., a zero-carbon goal by 2030 across all suppliers for an electronic document) based on content of a second clause of a first electronic document. In this example, system 202 may generate a report on past sustainability commitments and creates a dashboard to visualize past sustainability commitments (308). For example, ESG manager 212 may generate ESG metric data based on the first ESG commitment data and the second ESG commitment data. For instance, ESG manager may generate an ESG metric data indicating that a particular number of electronic documents have commitments for a zero-carbon goal by 2030 across all suppliers. In this example, ESG manager 212 may generate dashboard data based on the ESG metric data and output the dashboard data.

System 202, or more particularly, for example, ESG manager 212 and/or ESG clause generator 217, may integrate into future workflows and oversee sustainability commitments with system 202 (310). For example, ESG clause generator 217 may proactively identify an ESG clause to add to a working document based on one or more of ESG commitment data determined from electronic documents, ESG goal data, or ESG metric data. For instance, ESG clause generator 217 may provide, while IAM manager 214 manages a workflow for the working document, a potential ESG clause for inclusion in a working document. Based on a determination that the approval criteria for adding the ESG clause to the working document has been satisfied, IAM manager 214 may generate an electronic document based on the identified ESG clause and the working document. In this example, generating the electronic document based on the identified ESG clause can change an entity's ESG commitment data. As such, the process may continue to step 306 to review electronic documents (including the electronic document generated in step 310) and so on.

FIG. 4 is a conceptual diagram illustrating an example dashboard 402 filtering for ESG agreements, in accordance with one or more techniques of this disclosure. FIG. 4 is discussed with reference to FIGS. 1-3 for example purposes only. Dashboard 402 illustrates an ESG filter 404 as "green agreements," however, in some examples, the filter may, for example, instead refer to "ESG agreements." In the example of FIG. 4, dashboard 402 includes listing 410 of electronic documents that satisfy filter criteria for green agreements. For example, ESG manager 212 may generate dashboard data for generating dashboard 402 that selects electronic documents from a plurality of electronic documents stored at historical documents database 218 that have at least one ESG clause. Dashboard 402 may include other filters such as an expiration date, a party, a type of contract, and/or a value.

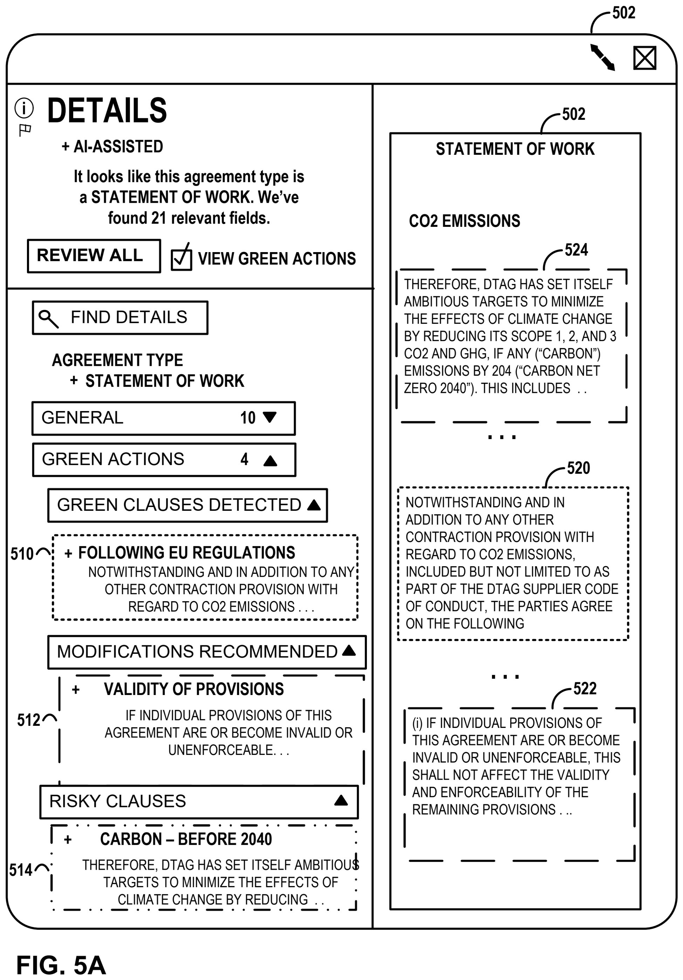

FIG. 5A is a conceptual diagram illustrating an example dashboard identifying ESG clauses of electronic documents, in accordance with one or more techniques of this disclosure. FIG. 5A is discussed with reference to FIGS. 1-4 for example purposes only.

In the example of FIG. 5A, ESG manager 212 may generate dashboard data to display both an indication of the ESG clause type and an indication of the risk value for compliance with the ESG goal data and to further display at least a portion of the content of a clause. For example, dashboard 502 includes a first indication 510 that identifies a first clause type (e.g., "Following EU Regulations") with an indication of a first risk value (e.g., a first color) for compliance with the ESG goal data. Dashboard 502 further includes content of first clause 520. Similarly, dashboard 502 includes a second indication 512 that identifies a second clause type (e.g., "Validity of Provisions") with an indication of a second risk value (e.g., a second color) for compliance with the ESG goal data. Dashboard 502 further includes content of second clause 522. Dashboard 502 includes a third indication 514 that identifies a third clause type (e.g., "Risky Clauses") with an indication of a third risk value (e.g., a third color) for compliance with the ESG goal data. Dashboard 502 further includes content of third clause 524.

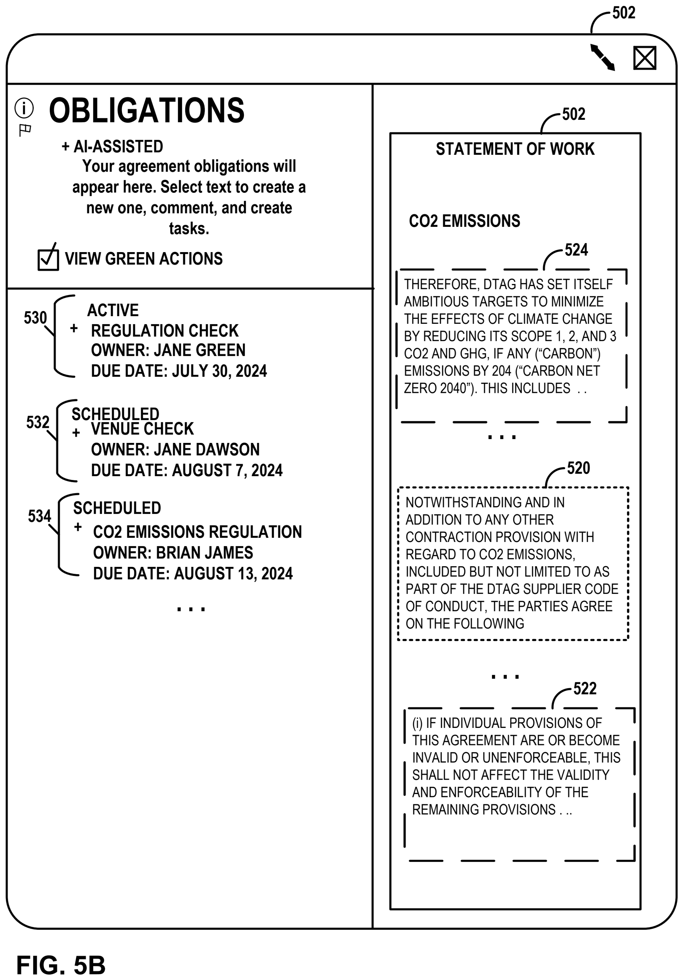

FIG. 5B is a conceptual diagram illustrating an example dashboard identifying contacts for ESG compliance, in accordance with one or more techniques of this disclosure. FIG. 5B is discussed with reference to FIGS. 1-4, 5A for example purposes only. In the example of FIG. 5B, ESG manager 212 may generate dashboard data to identify an owner and/or due date (active vs scheduled) for an ESG clause type. For example, dashboard 502 includes a contact data 530 that indicates an owner and due date for the first clause type (e.g., "Regulation Check") and dashboard 502 also includes content of first clause 520. Similarly, dashboard 502 includes a contact data 532 that indicates an owner and due date for the second clause type (e.g., "Venue Check") and dashboard 502 also includes content of second clause 522. Dashboard 502 includes contact data 534 that indicates an owner and due date for the third clause type (e.g., "CO₂ Emissions Regulation") and dashboard 502 also includes content of third clause 524.

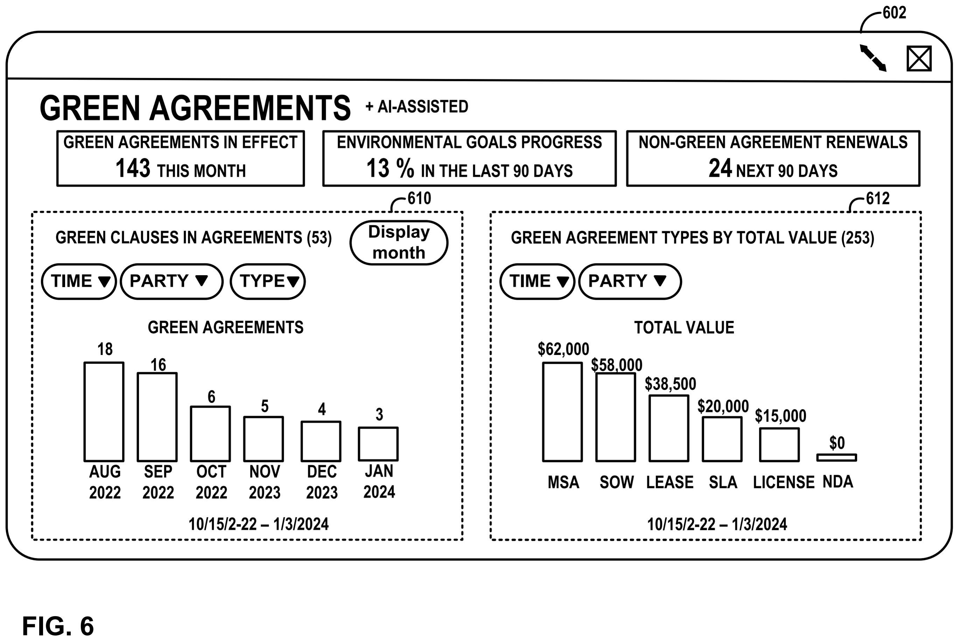

FIG. 6 is a conceptual diagram illustrating an example dashboard illustrating a first set of reports for ESG compliance, in accordance with one or more techniques of this disclosure. FIG. 6 is discussed with reference to FIGS. 1-4, 5A, and 5B for example purposes only. In the example of FIG. 6, ESG manager 212 may select electronic documents from a plurality of electronic documents stored at historical documents database 218 that have at least one ESG clause. In this example, ESG manager 212 may group the selected electronic documents by month to generate data for chart 610. As shown, chart 612 illustrates a number of ESG agreements (e.g., electronic documents with at least one ESG Clauses") per month.

ESG manager 212 may group the selected electronic documents by agreement type to generate data for chart 612, As shown, chart 612 illustrates green agreement types by total value in USD. Examples of agreement types may include, for example, master service agreement (MSA), statement of work (SOW), lease, service level agreement (SLA), license, or non-disclosure agreement (NDA).

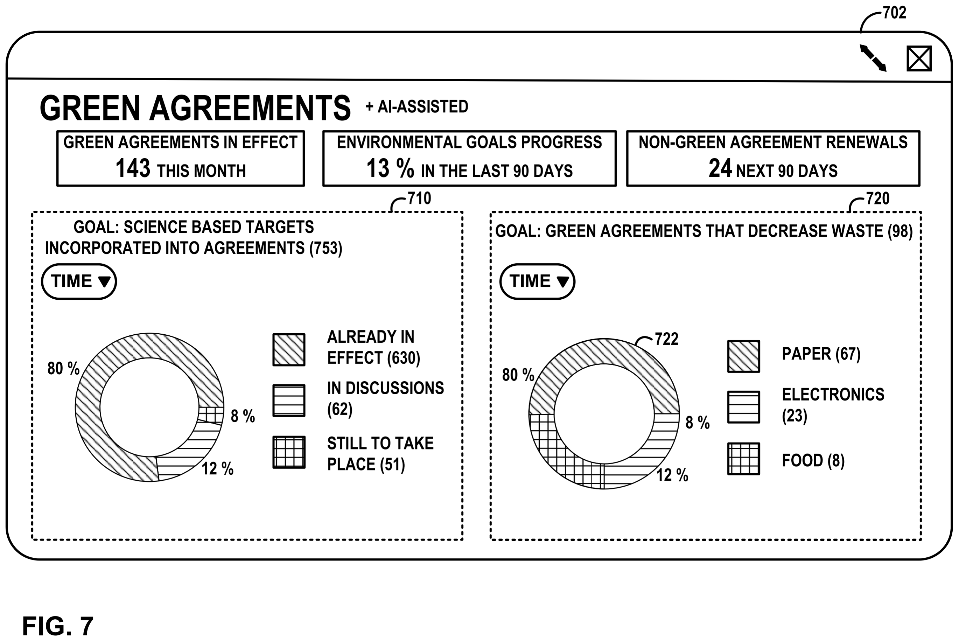

FIG. 7 is a conceptual diagram illustrating an example dashboard illustrating a second set of reports for ESG compliance, in accordance with one or more techniques of this disclosure. FIG. 7 is discussed with reference to FIGS. 1-4, 5A, 5B, and 6 for example purposes only. In the example of FIG. 7, ESG manager 212 may group electronic documents by ESG clause types directed to science-based targets that an entity has already in effect, ESG clause types directed to science-based targets that are in discussions, and ESG clause types directed to science-based targets that are still to take place. As shown, chart 710 illustrates a first number of ESG electronic documents with ESG clause types directed to science-based targets that an entity has already in effect, a second number of ESG electronic documents with ESG clause types directed to science-based targets that are in discussions, and a third number of ESG electronic documents with ESG clause types directed to science-based targets that are still to take place.

ESG manager 212 may group electronic documents by content (e.g., paper, electronics, or food) of an ESG clause type for decreasing waste. As shown, chart 720 illustrates a first number of ESG electronic documents with ESG clause types directed to reducing paper waste, a second number of ESG electronic documents with ESG clause types directed to reducing electronics waste, and a third number of ESG electronic documents with ESG clause types directed to reducing food waste.

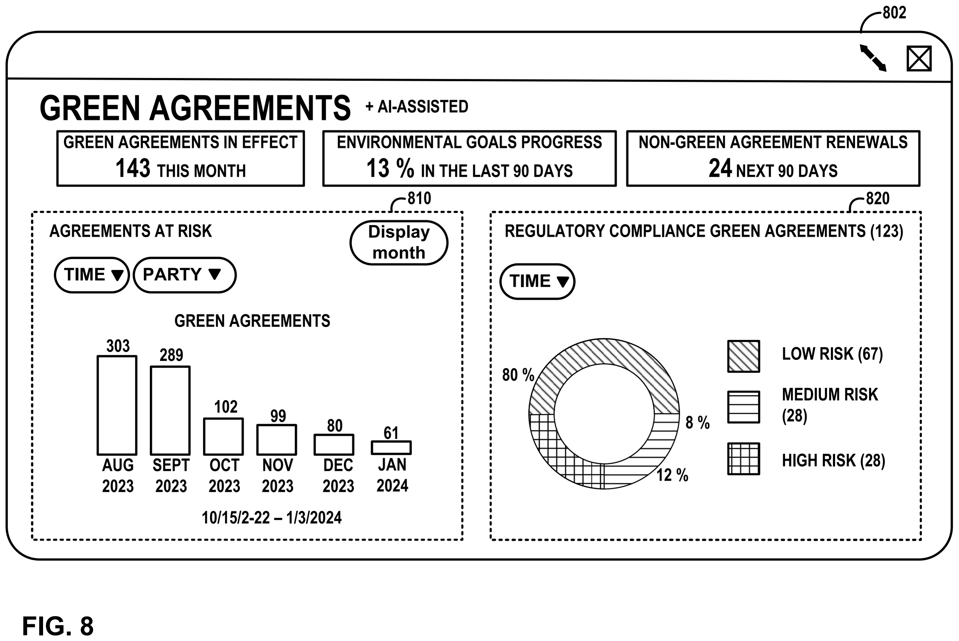

FIG. 8 is a conceptual diagram illustrating an example dashboard illustrating a third set of reports for ESG compliance, in accordance with one or more techniques of this disclosure. FIG. 8 is discussed with reference to FIGS. 1-4, 5A, 5B, 6, and 7 for example purposes only. In the example of FIG. 8, ESG manager 212 may determine a number of electronic documents that include an ESG clause type with a risk value that do not satisfy a risk threshold (e.g., a high risk). As shown, chart 810 illustrates a number of ESG electronic documents with ESG clause types that do not satisfy the risk threshold for each month.

ESG manager 212 may group electronic documents by risk. For instance, ESG manager 212 may select a risk category for each ESG clause type from a set of risk categories, for example, low risk, medium risk, and high risk. In this example, ESG manager 212 may group electronic documents by the risk category. As shown, chart 820 illustrates a first number of ESG electronic documents with ESG clause types grouped into the high risk category, a second number of ESG electronic documents with ESG clause types grouped into the medium risk category, and a third number of ESG electronic documents with ESG clause types grouped into the low risk category.

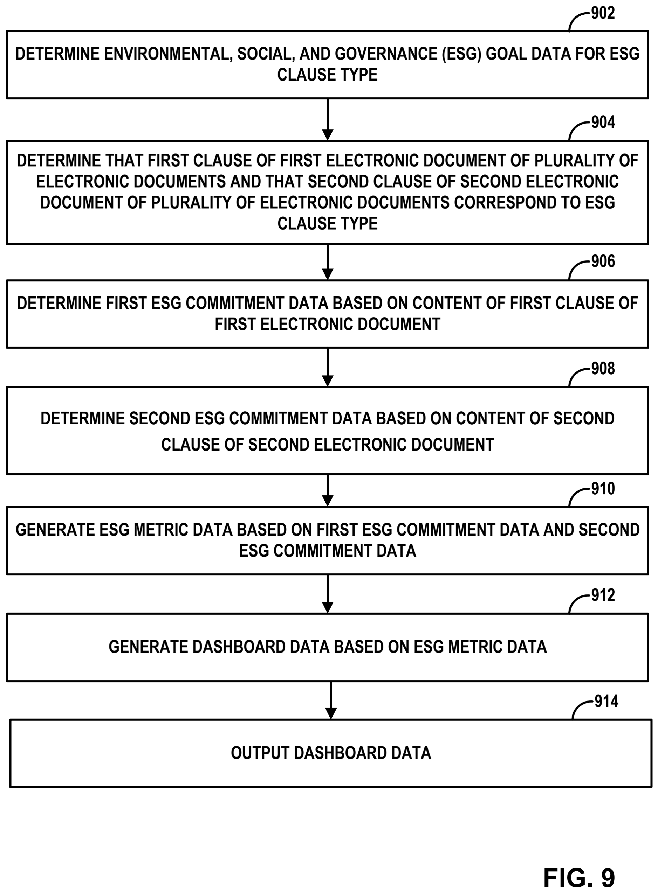

FIG. 9 is a flow chart illustrating an example of process for monitoring compliance with ESG, in accordance with techniques of this disclosure. FIG. 9 is discussed with reference to FIGS. 1-4, 5A, 5B, 6, 7, and 8 for example purposes only.

ESG manager 212 may determine ESG goal data for an ESG clause type (902). For example, ESG manager 212 may determine (e.g., with machine learning model 216) public ESG data from one or more external data sources 104 based on a particular entity. For instance, the particular entity may represent the company reviewing their ESG goals. ESG compliance database 222 may be configured to store private ESG data associated with the particular entity. For example, ESG manager 212 may receive the private ESG data from a user device associated with the particular entity and limit access to the private ESG data to user devices associated with the particular entity. In this example, ESG manager 212 may generate entity-specific ESG data based on the private ESG data and the public ESG data. ESG manager 212 may select the ESG goal data from the entity-specific ESG data based on the ESG clause type.

ESG manager 212 may determine that a first clause of a first electronic document of the plurality of electronic documents and that a second clause of a second electronic document of the plurality of electronic documents correspond to the ESG clause type (904). For example, ESG manager 212 may scan the first electronic document for specific sustainability-related keywords. Similarly, ESG manager 212 may scan the second electronic document for specific sustainability-related keywords.

ESG manager 212 may determine first ESG commitment data based on content of the first clause of the first electronic document (906). For example, ESG manager 212 may determine a monetary value, or a type and/or quantity of waste reduced (e.g., paper, electronics, or food) based on the content of the first clause. Similarly, ESG manager 212 may determine second ESG commitment data based on content of the second clause of the second electronic document (908).

ESG manager 212 may generate ESG metric data based on the first ESG commitment data and the second ESG commitment data (910). For example, ESG manager 212 determine a total monetary value for electronic documents that include at least one clause that corresponds to the clause type, a number of electronic documents executed per month that include at least one clause that corresponds to the clause type, a total quantity for each respective type of waste reduced (e.g., paper, electronics, and/or food), or a number of agreements in effect that include at least one clause that corresponds to the clause type.

In some examples, ESG manager 212 may determine a risk value for compliance with the ESG goal data based on the ESG goal data and the ESG metric data. For example, ESG manager 212 may determine, with machine learning model 216, the risk value for compliance with the ESG goal data based on a comparison of the ESG goal data and the ESG metric data. ESG manager 212 may select, from a plurality of risk categories, a risk category for the ESG clause type and the dashboard data based on the selected risk category for the ESG clause type.

ESG manager 212 may generate dashboard data based on the ESG metric data (912). ESG manager 212 may output the dashboard data (914). For example, ESG manager 212 may output the dashboard data, for example, to user device 108A. For example, ESG manager 212 may generate the dashboard data to display both an indication of the ESG clause type and an indication of the risk value for compliance with the ESG goal data. In some examples, ESG manager 212 may generate the dashboard data to display at least a portion of the content of the first clause of the first electronic document. ESG manager 212 may generate the dashboard data to display an indication of contact data assigned to the ESG clause type.

ESG manager 212 may, based on a determination that the risk value for compliance with the ESG goal data does not satisfy a risk threshold, determine count data indication a number of electronic documents of the plurality of electronic documents that comprise at least one clause corresponding to the ESG clause type and generate the dashboard data based on the count data. For example, ESG manager 212 may generate the dashboard data to show a chart (e.g., bar chart) showing the count data for each ESG clause type.

In some examples, ESG manager 212 may generate the dashboard data to display an indication of one or more of the first ESG clause or the second ESG clause for inclusion in a working document. In this way, ESG manager 212 may assist with ESG clause generation and/or integrate with future workflows.

Like reference characters denote like elements throughout the text and figures.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing an understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structures or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

## Claims

1. A system for monitoring environmental, social, and governance (ESG) clauses in electronic documents, the system (102, 202) comprising:
processing circuitry (213);
a database (218) configured to store a plurality of electronic documents; and
computer readable media comprising instructions that, when executed, cause the processing circuitry (213) to:
determine ESG goal data for an ESG clause type (902);
determine that a first clause of a first electronic document of the plurality of electronic documents and that a second clause of a second electronic document of the plurality of electronic documents correspond to the ESG clause type (904);
determine first ESG commitment data based on content of the first clause of the first electronic document (906);
determine second ESG commitment data based on content of the second clause of the second electronic document (908);
generate ESG metric data based on the first ESG commitment data and the second ESG commitment data (910);
generate dashboard data based on the ESG metric data (912); and
output the dashboard data (914).

2. The system (102, 202) of claim 1, wherein to generate the ESG metric data, the instructions cause the processing circuitry (213) to:
determine a risk value for compliance with the ESG goal data based on a comparison of the ESG goal data and the ESG metric data,
wherein the instructions cause the processing circuitry (213) to generate the dashboard data based on the risk value for compliance with the ESG goal data.

3. The system (102, 202) of claim 2, wherein to generate the dashboard data, the instructions cause the processing circuitry (213) to:
generate the dashboard data to display both an indication of the ESG clause type and an indication of the risk value for compliance with the ESG goal data.

4. The system (102, 202) of claim 3, wherein to generate the dashboard data, the instructions cause the processing circuitry (213) to:
generate the dashboard data to display at least a portion of the content of the first clause of the first electronic document; and/or
generate the dashboard data to display an indication of contact data assigned to the ESG clause type.

5. The system (102, 202) of any of claims 2 to 4, wherein to generate the dashboard data, the instructions cause the processing circuitry (213) to:
based on a determination that the risk value for compliance with the ESG goal data does not satisfy a risk threshold, determine count data indicating a number of electronic documents of the plurality of electronic documents that comprise at least one clause corresponding to the ESG clause type,
wherein the instructions cause the processing circuitry (213) to generate the dashboard data based on the count data.

6. The system (102, 202) of any of claims 2 to 5, wherein to generate the ESG metric data, the instructions cause the processing circuitry (213) to:
select, from a plurality of risk categories, a risk category for the ESG clause type based on the risk value for compliance with the ESG goal data,
wherein the instructions cause the processing circuitry (213) to generate the dashboard data based on the selected risk category for the ESG clause type.

7. The system (102, 202) of any of claims 1 to 6, wherein the instructions further cause the processing circuitry (213) to:
determine an ESG clause to add to a working document based on one or more of the first ESG commitment data, the second ESG commitment data, or the ESG goal data; and
generate an electronic document based on the identified ESG clause and the working document.

8. The system (102, 202) of any of claims 1 to 7, further comprising an ESG compliance database (222) configured to store private ESG data associated with a particular entity, wherein the instructions further cause the processing circuitry (213) to:
determine public ESG data from one or more external data sources (104) based on the particular entity; and
generate entity-specific ESG data based on the private ESG data and the public ESG data,
wherein to determine the ESG goal data, the instructions cause the processing circuitry (213) to select the ESG goal data from the entity-specific ESG data based on the ESG clause type.

9. The system (102, 202) of claim 8, wherein the instructions to determine the public ESG data from the one or more external data sources (104), cause the processing circuitry (213) to apply a machine learning model (216) to data stored at the one or more external data sources (104).

10. The system (102, 202) of any of claims 1 to 9, wherein the instructions to determine that the first clause of the first electronic document and that the second clause of the second electronic document correspond to the ESG clause type, cause the processing circuitry (213) to scan the first electronic document for specific sustainability-related keywords.

11. The system (102, 202) of any of claims 1 to 10, wherein the instructions to determine that the first clause of the first electronic document and that the second clause of the second electronic document correspond to the ESG clause type, cause the processing circuitry (213) to apply a machine learning model (216) to the plurality of electronic documents.

12. A method for monitoring environmental, social, and governance (ESG) clauses in electronic documents, the method comprising:
determining, by processing circuitry (213), ESG goal data for an ESG clause type (902);
determining, by the processing circuitry (213), that a first clause of a first electronic document of a plurality of electronic documents and that a second clause of a second electronic document of the plurality of electronic documents correspond to the ESG clause type (904);
determining, by the processing circuitry (213), first ESG commitment data based on content of the first clause of the first electronic document (906);
determining, by the processing circuitry (213), second ESG commitment data based on content of the second clause of the second electronic document (908);
generating, by the processing circuitry (213), ESG metric data based on the first ESG commitment data and the second ESG commitment data (910);
generating, by the processing circuitry (213), dashboard data based on the ESG metric data (912); and
outputting, by the processing circuitry (213), the dashboard data (914).

13. The method of claim 12, further comprising the processes performed by the system (102, 202) recited in any of claims 2 to 11.

14. Computer-readable media encoded with instructions that, when executed, cause processing circuitry (213) to:
determine environmental, social, and governance (ESG) goal data for an ESG clause type (902);
determine that a first clause of a first electronic document of a plurality of electronic documents and that a second clause of a second electronic document of the plurality of electronic documents correspond to the ESG clause type (904);
determine first ESG commitment data based on content of the first clause of the first electronic document (906);
determine second ESG commitment data based on content of the second clause of the second electronic document (908);
generate ESG metric data based on the first ESG commitment data and the second ESG commitment data (910);
generate dashboard data based on the ESG metric data (912); and
output the dashboard data (914).

15. The computer-readable storage medium of claim 14, wherein the instructions further cause the processing circuitry (213) to perform the processes performed by the system (102, 202) recited in any of claims 2 to 11.
